# EUROPÄISCHE PATENTSCHRIFT

(11) **EP 2 389 545 B1**
(45) Veröffentlichungstag und Bekanntmachung des Hinweises auf die Patenterteilung: **01.05.2013**
(21) Anmeldenummer: 10762603.8
(22) Anmeldetag: 27.09.2010
(51) Int. Cl.: F24F 5/00, F24F 12/00

(54) **KLIMAGERÄT MIT ZULUFTKÜHLUNG OHNE NUTZUNG EINER KÄLTEMASCHINE**
AIR CONDITIONER WITH COOLING OF SUPPLY AIR WITHOUT USING A REFRIGERATION MACHINE
APPAREIL POUR LA CLIMATISATION AVEC REFROIDISSEMENT DE L'AIR FRAIS SANS EMPLOI D' UNE MACHINE DE REFRIGERATION

(30) Priorität: 07.10.2009 DE 102009048543
(43) Veröffentlichungstag der Anmeldung: 30.11.2011
(73) Patentinhaber: Menerga GmbH, 45473 Mülheim an der Ruhr (DE)
(72) Erfinder: RÖBEN, Jürgen, 45136 Essen (DE)
(74) Vertreter: Cohausz Hannig Borkowski Wißgott
(86) Internationale Anmeldenummer: PCT/EP2010/005886
(87) Internationale Veröffentlichungsnummer: WO 2011/042126

(56) Entgegenhaltungen:
- WO-A1-2005/073656
- DE-A1- 10 336 430

## Beschreibung

Die Erfindung betrifft ein Klimagerät mit mindestens einem Luft/Luft-Plattenwärmeübertrager, der in einer Richtung von der Außenluft durchströmt ist, die nach Abkühlung im Luft/Luft-Plattenwärmeübertrager die Zuluft zum Gebäudeinneren bildet, und der Luft/Luft-Plattenwärmeübertrager in der Quer- und/oder entgegengesetzten Richtung von der Abluft des Gebäudes durchströmt ist, die einen Teil der Wärme der Außenluft übernimmt und zur Fortluft wird, wobei in die Abluft insbesondere in den die Abluft führenden Zwischenräumen des Luft/Luft-Plattenwärmeübertragers Wasser gesprüht wird zur Abkühlung der Abluft und der die Außenluft führenden Platten, und wobei das aus den Sprühdüsen austretende und nicht verdunstete Wasser unterhalb des Luft/Luft-Plattenwärmeübertragers aufgefangen und im Kreislauf zu den Sprühdüsen zurückgeführt wird.

Derartige doppel-rekuperativ arbeitende Klimageräte mit zweistufiger Wärmerückgewinnung und adiabater Verdunstungskühlung sind für lufttechnische Anlagen von Gebäuden bekannt. Sie erreichen bereits eine hohe Wärmerückgewinnung und Verdunstungskühlung, ohne zusätzlichen Stromverbrauch.

DE 103 36 430 A1 zeigt ein bekanntes Klimagerät.

Aufgabe der Erfindung ist es, den Wirkungsgrad des eingangs genannten Klimagerätes weiter zu erhöhen und damit die Kühlwirkung insbesondere im Sommerbetrieb zu verbessern, ohne zusätzlichen Energieaufwand bzw. Stromverbrauch.

Diese Aufgabe wird erfindungsgemäß dadurch gelöst, dass vom Kreislauf Wasser abgezweigt und zu einem Wasser/Luft-Wärmeübertrager geführt wird, der von der Abluft vor dem Luft/Luft-Plattenwärmeübertrager durchströmt ist, um die Abluft vor dem Luft/Luft-Plattenwärmeübertrager abzukühlen, und dass das abgezweigte Wasser hinter dem Wasser/Luft-Wärmeübertrager abgekühlt und danach in den Kreislauf zurückgeführt wird.

Ein solcher zusätzlich abgezweigter Wasserkreislauf führt dazu, dass die Temperatur der dem Raum/den Räumen zugeführte Zuluft um mindestens zwei Grad weiterhin erniedrigt wird, ohne zusätzliche Energie einbringen zu müssen. Hierbei sind der Herstellungs- und Montageaufwand gering und bei hoher Funktionssicherheit werden die Außenabmessungen nicht vergrößert.

Eine besonders einfache, wirksame und sichere Abkühlung des abgezweigten Wassers wird dann erreicht, wenn zum Abkühlen des abgezweigten Wassers hinter dem Wasser/Luft-Wärmeübertrager das abgezweigte Wasser versprüht und danach aufgefangen und dem Kreislauf wieder zugeführt wird. Hierbei kann das abgezweigte Wasser zwischen die Platten eines dem Luft/Luft-Plattenwärmeübertrager vorgeschalteten zweiten Luft/Luft-Plattenwärmeübertrager oder einem Bereich des Luft/Luft-Plattenwärmeübertragers in die Abluft versprüht werden, wobei der zweite Luft/Luft-Plattenwärmeübertrager oder der Bereich des Luft/Luft-Plattenwärmeübertragers von der Außenluft zuerst durchströmt ist.

Eine weitere Verbesserung wird erreicht, wenn das abgezweigte Wasser auf ein Verdunstungselement gesprüht wird, das in den Abluftstrom eingesetzt und oberhalb des Luft/Luft-Plattenwärmeübertragers oder zwischen die Platten des Luft/Luft-Plaftenwärmeübertragers angeordnet ist.

Vorzugsweise wird vorgeschlagen, dass die Außenluft durch einen hygroskopisch arbeitenden Absorber entfeuchtet wird. Hierbei kann der Absorber vor dem Luft/Luft-Plattenwärmeübertrager in dem Außenluftkanal angeordnet sein. Auch ist hierbei besonders vorteilhaft, wenn der Absorber eine Sole aufweist, die die Feuchtigkeit der Außenluft aufnimmt.

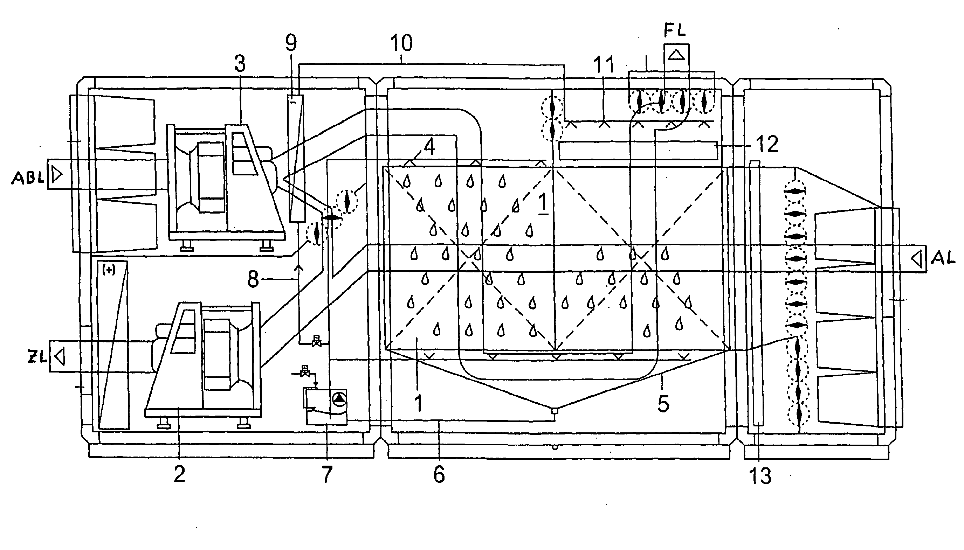

Ein Ausführungsbeispiel der Erfindung ist in der Zeichnung in einem Schnitt schematisch dargestellt und wird im Folgenden näher beschreiben.

Das Klimagerät weist mindestens einen Luft/Luft-Plattenwärmeübertrager (Luft/Luft-Plattenwärmetauscher) 1 auf, mit einer indirekten Wärmeübertragung, d. h. die beiden Luftströme sind räumlich durch wärmedurchlässige Wände getrennt, so dass es sich um einen Rekuperator handelt. Hierbei sind die Luftströme im Kreuzstrom geführt, wobei die Außenluft AL in Längsrichtung durch den Wärmeübertrager 1 geführt wird und über ein Gebläse 2 in den Raum oder die Räume eines Gebäudes geführt wird und damit zur Zuluft ZL wird. Die Abluft ABL wird durch ein Gebläse 3 aus dem Gebäude gesaugt und durch den Wärmeübertrager 1 geführt. Hierbei wird im Ausführungsbeispiel die Abluft zweimal quer durch den Wärmeübertrager 1 geführt, um dann zur Fortluft FL zu werden.

In den Zwischenräumen des Wärmeübertragers 1, durch die die Abluft strömt, wird zwischen den im wesentlich senkrecht angeordneten Platten des Wärmeübertrages zur Kühlung der Platten und der Abluft über Sprühdüsen 4 Wasser eingesprüht, das unterhalb des Wärmeübertragers durch eine Wanne 5 aufgefangen wird, so weit es nicht verdunstet ist. Von der Wanne 5 wird das Wasser über eine Leitung 6 und eine Pumpe 7 zu den Sprühdüsen 4 zurückgefördert.

Neben den oberhalb des Plattenwärmeübertragers 1 angeordneten Sprühdüsen 4 können auch unterhalb des Wärmeübertragers Sprühdüsen angeordnet sein, die das Wasser nach oben versprühen.

Hinter der Pumpe 7 zweigt von der Leitung 6 eine Leitung 8 ab, die an einem Wasser/Luft-Wärmeübertrager 9 angeschlossen ist, um diesen mit dem abgezweigten Wasser zu durchströmen. Hinter dem Wärmeübertrager 9 fließt das Wasser über eine Leitung 10 zu Sprühdüsen 11, die oberhalb des Wärmeübertrages 1 angeordnet sind und insbesondere ein Verdunstungselement 12 besprühen. Das nicht verdunstete Wasser fließt unterhalb des Verdunstungselements 12 insbesondere auch noch in Sprühform in die Zwischenräume des Wärmeübertrages 1, die von der Abluft durchströmt sind.

Der Wasser/Luft-Wärmeübertrager ist im Gegenstrom oder Kreuzstrom von der Abluft ABL durchströmt, wobei der Wärmeübertrager 9 hinter dem Gebläse 3 und vor dem Wärmeübertrager 1 angeordnet ist. Hierdurch wird die Abluft vor dem Luft/Luft-Plattenwärmeübertrager 1 von dem Wasser gekühlt, das vom Wasserkreislauf (Leitung 6, Pumpe 7) abgezweigt ist. Hierbei übernimmt das abgezweigte Wasser im Wärmeübertrager 9 Wärmeenergien von der Abluft und fördert diese über die Leitung 10 zu den Sprühdüsen 11, um dort die Wärmeenergie an die Abluft bzw. Fortluft hinter dem Plattenwärmeübertrager 1 abzugeben. Diese Abkühlung der Abluft, bevor die Abluft in den Wärmeübertrager 1 gelangt, führt dazu, dass es zu einer weiteren Abkühlung des Plattenwärmeübertragers 1 kommt und damit zu einer weiteren Abkühlung der durch den Wärmeübertrager 1 strömenden Außenluft, so dass die in das Gebäude strömende Zuluft um mindestens zwei Grad weiter abgekühlt wird, im Vergleich zu einem Klimagerät ohne den abgezweigten Wasserkreislauf mit Wasser/Luft-Wärmeübertrager 9.

Zum Abkühlen des durch die Leitung 10 strömenden abgezweigten Wassers und damit zum Abkühlen des abgezweigten Wassers im Bereich des Wärmeübertrages 1 können auch andere Abkühltechniken verwendet werden. So kann beispielsweise das Verdunstungselement 12 fehlen und es können die Sprühdüsen 11 direkt in die Zwischenräume des Wärmeübertragers 1 sprühen, die von der Abluft durchströmt sind. Ferner kann zu diesem Abkühlen auch ein zweiter Wärmeübertrager neben dem Wärmeübertrager 1 angeordnet sein oder der Wärmeübertrager 1 in zwei Teile aufgeteilt sein.

In einer weiteren Ausführung wird die Außenluft vor dem Wärmeübertrager 1 durch einen hygroskopisch arbeitenden Absorber 13 geführt, der vorzugsweise eine Sole aufweist, um Feuchtigkeit der Außenluft aufzunehmen.

## Patentansprüche

1. Klimagerät mit mindestens einem Luft/Luft-Plattenwärmeübertrager (1), der in einer Richtung von der Außenluft durchströmt ist, die nach Abkühlung im Luft/Luft-Plattenwärmeübertrager die Zuluft zum Gebäudeinneren bildet,
und der Luft/Luft-Plattenwärmeübertrager in der Quer- und/oder entgegengesetzten Richtung von der Abluft des Gebäudes durchströmt ist, die einen Teil der Wärme der Außenluft übernimmt und zur Fortluft wird,
wobei in die Abluft insbesondere in den die Abluft führenden Zwischenräumen des Luft/Luft-Plattenwärmeübertragers (1) Wasser gesprüht wird zur Abkühlung der Abluft und der die Außenluft führenden Platten,
und wobei das aus den Sprühdüsen austretende und nicht verdunstete Wasser unterhalb des Luft/Luft-Plattenwärmeübertragers aufgefangen und im Kreislauf (6, 7) zu den Sprühdüsen zurückgeführt wird,
**dadurch gekennzeichnet, dass** vom Kreislauf (6, 7) Wasser abgezweigt und zu einem Wasser/Luft-Wärmeübertrager (9) geführt wird, der von der Abluft vor dem Luft/Luft-Plattenwärmeübertrager (1) durchströmt ist, um die Abluft vor dem Luft/Luft-Plattenwärmeübertrager abzukühlen,
und dass das abgezweigte Wasser hinter dem Wasser/Luft-Wärmeübertrager (9) abgekühlt und danach in den Kreislauf (6, 7) zurückgeführt wird.

2. Klimagerät nach Anspruch 1**,dadurch gekennzeichnet, dass** zum Abkühlen des abgezweigten Wassers hinter dem Wasser/Luft-Wärmeübertrager (9) das abgezweigte Wasser versprüht und danach aufgefangen und dem Kreislauf (6, 7) wieder zugeführt wird.

3. Klimagerät nach Anspruch 2, **dadurch gekennzeichnet, dass** das abgezweigte Wasser zwischen die Platten eines dem Luft/Luft-Plattenwärmeübertrager (1) vorgeschalteten zweiten Luft/Luft-Plattenwärmeübertrager oder einem Bereich des Luft/Luft-Plattenwärmeübertragers in die Abluft versprüht wird, wobei der zweite Luft/Luft-Plattenwärmeübertrager oder der Bereich des Luft/Luft-Plattenwärmeübertragers von der Außenluft zuerst durchströmt ist.

4. Klimagerät nach Anspruch 2 oder 3, **dadurch gekennzeichnet, dass** das abgezweigte Wasser auf ein Verdunstungselement gesprüht wird, das in den Abluftstrom eingesetzt und oberhalb des Luft/Luft-Plattenwärmeübertragers (1) oder zwischen die Platten des Luft/Luft-Plattenwärmeübertragers angeordnet ist.

5. Klimagerät nach einem der vorherigen Ansprüche, **dadurch gekennzeichnet, dass** die Außenluft durch einen hygroskopisch arbeitenden Absorber entfeuchtet wird.

6. Klimagerät nach Anspruch 5, **dadurch gekennzeichnet, dass** der Absorber vor dem Luft/Luft-Plattenwärmeübertrager (1) in dem Außenluftkanal angeordnet ist.

7. Klimagerät nach Anspruch 5 oder 6, **dadurch gekennzeichnet, dass** der Absorber eine Sole aufweist, die die Feuchtigkeit der Außenluft aufnimmt.

## Claims

1. Air conditioner comprising an air/air plate heat exchanger (1) through which the outside air flows in one direction, and which forms the supply air to the building interior after cooling in the air/air plate heat exchanger, and the exhaust air of the building flows through the air/air plate heat exchanger in the transverse and/or opposite direction, which absorbs a portion of the heat of the outside air and becomes outgoing air, wherein water is sprayed into the exhaust air, in particular into the intermediate chambers of the air/air plate heat exchanger (1) conducting the exhaust air, to cool the exhaust air and the plates conducting the outside air, and wherein the non-evaporated water exiting the spray nozzles is collected beneath the air/air plate heat exchanger and returned to the spray nozzles in the circuit (6, 7), **characterised in that** water is diverted from the circuit (6, 7) and conducted to a water/air heat exchanger (9), through which the exhaust air flows before the air/air plate heat exchanger (1), in order to cool the exhaust air before the air/air plate heat exchanger and the diverted water is cooled behind the water/air heat exchanger (9) and is then returned to the circuit (6, 7).

2. Air conditioner according to claim 1, **characterised in that**, for cooling of the diverted water behind the water/air heat exchanger (9), the diverted water is sprayed and then collected and is subsequently fed to the circuit (6, 7) again.

3. Air conditioner according to claim 2, **characterised in that** the diverted water is sprayed between the plates of a second air/air plate heat exchanger connected upstream of the air/air plate heat exchanger (1) or is sprayed into the exhaust air in a region of the air/air plate heat exchanger (1), wherein firstly the outside air flows through the second air/air plate heat exchanger or the region of the air/air plate heat exchanger.

4. Air conditioner according to claim 2 or 3, **characterised in that** the diverted water is sprayed onto an evaporating element which is placed in the exhaust air flow and is arranged above the air/air plate heat exchanger (1) or between the plates of the air/air plate heat exchanger (1).

5. Air conditioner according to one of the preceding claims, **characterised in that** the outside air is dehumidified by means of a hygroscopically acting absorber.

6. Air conditioner according to claim 5, **characterised in that** the absorber is arranged in front of the air/air plate heat exchanger (1) in the outside air channel.

7. Air conditioner according to claim 5 or 6, **characterised in that** the absorber has a salt solution which absorbs moisture from the outside air.

## Revendications

1. Appareil de climatisation comprenant au moins un échangeur de chaleur à plaques air/air (1), qui est balayé par le flux d'air extérieur dans une direction, lequel air extérieur forme, après son refroidissement dans l'échangeur de chaleur à plaques air/air, l'air frais vers l'intérieur du bâtiment,
et l'échangeur de chaleur à plaques air/air est balayé par l'air vicié du bâtiment dans la direction transversale et/ou dans la direction contraire, lequel air vicié transfère une partie de la chaleur de l'air extérieur et devient l'air d'évacuation,
de l'eau étant pulvérisée dans l'air vicié, en particulier dans les espaces intermédiaires, véhiculant l'air vicié, de l'échangeur de chaleur à plaques air/air (1), pour le refroidissement de l'air vicié et des plaques véhiculant l'air extérieur,
et l'eau, sortant des buses de pulvérisation et non évaporée, étant recueillie au-dessous de l'échangeur de chaleur à plaques air/air et retournée dans le circuit (6, 7) vers les buses de pulvérisation,
**caractérisé en ce que** de l'eau est dérivée du circuit (6, 7) et envoyée dans un échangeur de chaleur eau/air (9), qui est balayé par l'air vicié en amont de l'échangeur de chaleur à plaques air/air (1), afin de refroidir l'air vicié en amont de l'échangeur de chaleur à plaques air/air,
et que l'eau dérivée est refroidie en aval de l'échangeur de chaleur eau/air, puis retournée dans le circuit (6, 7).

2. Appareil de climatisation selon la revendication 1, **caractérisé en ce que**, pour le refroidissement de l'eau dérivée, cette eau dérivée est pulvérisée en aval de l'échangeur de chaleur eau/air (9), puis recueillie et renvoyée dans le circuit (6, 7).

3. Appareil de climatisation selon la revendication 2, **caractérisé en ce que** l'eau dérivée est pulvérisée dans l'air vicié entre les plaques d'un second échangeur de chaleur à plaques air/air, monté en amont de l'échangeur de chaleur à plaques air/air (1), ou dans une zone de l'échangeur de chaleur à plaques air/air, le second échangeur de chaleur à plaques air/air ou la zone de l'échangeur de chaleur à plaques air/air étant d'abord balayé par le flux d'air extérieur.

4. Appareil de climatisation selon l'une des revendications 2 et 3, **caractérisé en ce que** l'eau dérivée est pulvérisée sur un élément d'évaporation, qui est mis en place dans le flux d'air vicié et disposé au-dessus de l'échangeur de chaleur à plaques air/air (1) ou entre les plaques de l'échangeur de chaleur air/air.

5. Appareil de climatisation selon l'une des revendications précédentes, **caractérisé en ce que** l'air extérieur est déshumidifié par un absorbeur hygroscopique.

6. Appareil de climatisation selon la revendication 5, **caractérisé en ce que** l'absorbeur est disposé dans le conduit d'air extérieur en amont de l'échangeur de chaleur à plaques air/air (1).

7. Appareil de climatisation selon l'une des revendications 5 et 6, **caractérisé en ce que** l'absorbeur présente une saumure, qui absorbe l'humidité de l'air extérieur.
